Europäisches Patentamt

European Patent Office

Office européen des brevets

(11) Veröffentlichungsnummer: **0 081 069**
**B1**

(12) **EUROPÄISCHE PATENTSCHRIFT**

(45) Veröffentlichungstag der Patentschrift:
03.09.86

(21) Anmeldenummer: **82109485.1**

(22) Anmeldetag: **14.10.82**

(51) Int. Cl.⁴: **B 29 C  67/20,** B 29 C  67/12

(54) Schaumstoffbahn aus einem geschlossenzellig geschäumten, vernetzten Kunststoffkörper.

(30) Priorität: **09.12.81  DE 3148710**

(43) Veröffentlichungstag der Anmeldung:
**15.06.83 Patentblatt 83/24**

(45) Bekanntmachung des Hinweises auf die Patenterteilung:
**03.09.86 Patentblatt 86/36**

(84) Benannte Vertragsstaaten:
**AT BE CH DE FR GB IT LI NL SE**

(56) Entgegenhaltungen:
**GB-A-986 077**
**GB-A-1 425 592**
**GB-A-1 443 732**
**US-A-2 429 486**
**US-A-3 366 529**

(73) Patentinhaber: **Firma Carl Freudenberg, Höhnerweg 4, D-6940 Weinheim/Bergstrasse (DE)**

(72) Erfinder: **Ebert, Heinrich, Marienstrasse 11, D-6941 Abtsteinach (DE)**
Erfinder: **Noe, Manfred, Mittelstrasse 2, D-6941 Laudenbach (DE)**
Erfinder: **Wind, Kurt, Lärchenweg 8, D-6940 Weinheim (DE)**

(74) Vertreter: **Weissenfeld- Richters, Helga, Dr., Höhnerweg 2, D-6940 Weinheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaumstoffbahn, bestehend aus einem geschlossenzellig geschäumten, vernetzten Kunststoffkörper, der eine sich im wesentlichen parallel zu der Oberseite erstreckende Unterseite aufweist, bei dem die Ober- und/oder die Unterseite durch in den Kunststoffkörper eindringende, musterartig über die Fläche verteilte Kanäle mit darin eingenadelten Fasern unterbrochen ist.

Auf eine Schaumstoffbahn der vorgenannten Art nimmt die GB-A-986 077 Bezug. Die darin enthaltenen Kanäle werden durch die Wandungen der durch den Nadelungsvorgang angeschnittenen Poren des Kunststoffkörpers begrenzt und zeigen eine dementaprechend starke Zerklüftung. Sie vermögen indessen den eingenadelten Fasern, die naturgemäß eine relativ glatte Oberfläche haben, keinen guten Halt zu verleihen. Die Verwendungsmöglichkeiten entsprechender Schaumstoffbahnen erfahren dadurch eine starke Beschränkung.

Die Aufgabe der vorliegenden Erfindung ist darauf gerichtet, eine Schaumstoffbahn zu zeigen, die sich vorteilhaft von einer Ausführung der vorstehend angesprochenen Art unterscheidet.

Diese Aufgabe wird erfindungsgemäß dadurch gelöst, daß die in den Kunststoffkörper eingenadelten Fasern wenigstens einfach gekräuselt sind. Die Fasern haben dadurch zumindest teilweise einen sich quer zur Richtung der Kanäle erstreckenden Verlauf und in dieser Richtung eine größere Ausdehnung als die Kanäle. Ihre axiale Festlegung in den Kanälen erfährt dadurch eine deutliche Verbesserung. Ein unbeabsichtigtes Herauslösen oder Herausfallen der Fasern aus den Kanälen ist nicht mehr möglich, was es erlaubt, die erfindungsgemäße Schaumstoffbahn neuen und verbesserten Anwendungen zuzuführen, beispielsweise einer Verwendung bei der Herstellung hochwertiger Einlegesohlen.

Die Fasern können in einen Kunststoffkörper mit weichelastischen Eigenschaften eingebettet werden und sind in diesem Falle lediglich durch den Kunststoffkörper verbunden. Sie vermögen eine Umformung unter der Einwirkung von Druck und Wärme nicht zu behindern, bewirken jedoch eine ausgezeichnete Stabilisierung der Raumstruktur des Schaumstoffes, wodurch Veränderungen der Eigenschaften während des Umformens verhindert werden.

Die die Ober- und/oder die Unterseite unterbrechenden Kanäle können nach Art von Sacklöchern senkrecht oder schräg zur Erstreckung in die Schaumstoffbahn eindringen. Sie können diese ganz durchdringen, so daß eine Mündung die Oberseite, die andere Mündung hingegen die Unterseite unterbricht.

Sie können auch derart ineinander übergehen, daß jeder Kanal mehrere Mündungen im Bereich der Ober, und/oder der Unterseite aufweist. Die einzelnen Teilkanäle schließen in diesem Falle mit der Erstreckung der Schaumstoffbahn einen spitzen Winkel ein. Effekte, bei denen es auf eine besondere Gestaltung der Oberfläche maßgeblich ankommt, wie beispielsweise die Absorptionsfähigkleit oder Durchlässigkeit gegenüber Luftschall oder Feuchtigkeit, lassen sich hierdurch wesentlich verstärken.

Die Kanäle bestehen aus kreis- oder polygonförmig ausgeführten Löchern, die ohne Entnahme von Werkstoffbestandteilen erzeugt sind. Nach der Einlagerung der Fasern ergibt sich hierdurch eine gegenseitige Verpressung zwischen den Fasern und der Innenwandung der Kanäle. Letztere besteht im wesentlichen aus den Wänden der angeschnittenen, kugelförmigen Poren des Schaumstoffes, und sie zeigt eine dementsprechend starke Zerklüftung, was für die Festlegung der gekräuselten Fasern sowie im Hinblick auf die Erzielung einer guten Absorptionskapazität von Vorteil ist. Letztere läßt sich weiter steigern durch die Verwendung von Fasern mit einer offenen Porenstruktur.

Die in die Kanäle vorspringenden Teile der angeschnittenen Zellwände weisen eine große Anschmiegsamkeit auf und vermögen in feinste Unregelmäßigkeiten der Oberfläche der eingelagerten Fasern einzudringen. Diese erfahren dadurch eine zusätzliche Sicherung hinsichtlich der Verankerung.

Die Fasern können zusätzlich auf adhäsive Weise mit der Wandung der Kanäle verbunden werden, beispielsweise durch thermoplastische Erweichung des Kunststoffkörpers oder unter Zuhilfenahme eines reaktiven Klebstoffes. In beiden Fällen wird eine besonders gute Homogenität der mechanischen Eigenschaften erzielt.

Der Kunststoffkörper kann aus einem geschlossenzellig geschäumten, vernetzten Polyolefin bestehen, beispielsweise aus Polyethylen, Polypropylen oder einem Verschnitt aus beiden Werkstoffen. Polypropylen zeichnet sich neben einer verbesserten Temperaturbeständigkeit durch eine größere Härte gegenüber Polyethylen aus, letzteres besitzt jedoch ein besseres Absorptionsvermögen für Luftschall. In Abhängigkeit von dem vorgesehenen Verwendungszweck ist es deshalb unerläßlich, eine fachkundige Auswahl zu treffen. Es können auch Schaumstoffbahnen aus polymeren Werkstoffen, entstanden durch Polykondensation, Polymerisation oder Polyaddition, verwendet werden (z.B. PVC, EVA, Polystyrol usw). Durch den Einsatz dieser Schaumstoffe können bestimmte mechanische, elektrische und optische Eigenschaften gezielt erreicht werden (z.B. Zugfestigkeit, E-Modul, Formbeständigkeit, Verhalten bei Erwärmung, Isolationsverhalten usw.).

Der Gegenstand der vorliegenden Erfindung wird anhand der in der Anlage beigefügten Zeichnungen nachfolgend weiter erläutert. Es zeigen:

Figuren 1 bis 5 unterschiedliche Zuordnungen der Kanäle zum Profil des Kunststoffkörpers.

Figur 6 die Oberseite des Kunststoffkörpers zur Verdeutlichung einer möglichen gegenseitigen Zuordnung der Lage der einzelnen Kanäle.

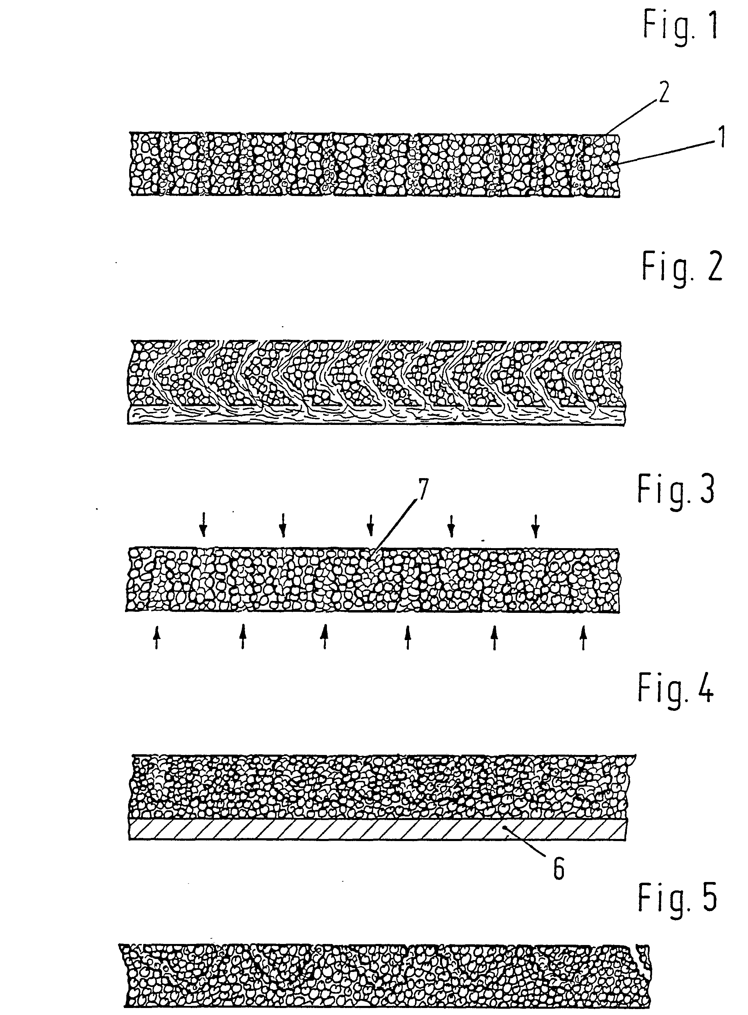

Der Kunststoffkörper 1 gemäß Figur 1 besteht aus einem geschlossenzellig geschäumten, vernetzten Polyethylen mit einem Raumgewicht von 70 kg/m³. Die Dicke beträgt 10 mm.

Der Kunststoffkörper 1 ist von musterartig über die gesamte Oberfläche gleichmäßig verteilten, senkrechten Kanälen 2 ganz durchdrungen. Diese haben ein im Bereich der Ober- und im Bereich der Unterseite erkennbares, kreisförmiges Profil und einen gegenseitigen Mittelpunktsabstand von 2 mm.

Das Profil der Kanäle 2 zeigt durch die Vielzahl der angeschnittenen, ursprünglich kugelförmig ausgebildeten Zellen eine starke Zerklüftung.

Die absorptionswirksame Oberfläche ist dadurch stark vergrößert.

Die den Kunststoffkörper 1 gemäß Figur 2 durchdringenden Kanäle 2 sind etwa in der Mitte des Kunststoffkörpers unter einem rechten Winkel abgeknickt und enthalten Bündel aus gekräuselten Polypropylenfasern, die in ein auf die Unterseite aufgelegtes Vlies eingebunden sind. Die Absorptionskapazität ist hierdurch stark vergrößert. Das Vlies besteht ebenfalls aus Polypropylenfasern, und hat bei einem Flächengewicht von 150 g/m² eine Dicke von 3 mm. Es zeichnet sich bei einer guten Sprungelastizität durch völlige Bindemittelfreiheit aus.

Die Feuchtigkeitsaufnahmefähigkeit von Polypropylen ist vernachlässigbar gering. Dennoch weist die Schaumstoffbahn gemäß Figur 2 infolge der zwischen den einzelnen Polypropylenfasern wirksamen Kapillaraktivität eine gute Durchlässigkeit für Wasserdampf auf. Das Porensystem der auf der Unterseite angeordneten Vliesschicht ist unmittelbar mit demjenigen der in den Kanälen 2 enthaltenen Fasern verbunden. Sowohl hinsichtlich der Aufnahme als auch hinsichtlich der Abgabe von Wasserdampf je Zeiteinheit weist infolgedessen die Unterseite eine größere Kapazität auf als die Oberseite. Aufgenommene Feuchtigkeit wird dadurch bevorzugt in diesem Bereich gespeichert. Beispielsweise eine entsprechend ausgebildete Einlegesohle weist dadurch auch nach längerem Gebrauch eine trocken erscheinende Oberfläche auf und die aufgenommene Feuchtigkeit kann nach dem Herausnehmen der Einlegesohle aus dem Schuh in kurzer Zeit über die freie Unterseite verdunsten.

Figur 3 zeigt einen Kunststoffkörper 1 aus einem geschlossenzellig geschäumten, vernetzten Polyethylen mit einer Dicke von 15 mm. Ober- und Unterseite des Kunststoffkörpers 1 sind durch abwechselnd senkrecht eindringende, sacklochartig ausgebildete Kanäle 2 unterbrochen. Das geschlossene Ende der Kanäle hat jeweils einen Abstand von 1,5 mm von der gegenüberliegenden Seite des Kunststoffkörpers 1. Die Kanäle 2 haben ein an der Mündung erkennbares, kreisförmiges Profil mit einem Durchmesser von 3 mm. Der gegenseitige Achsabstand beträgt 12 mm.

Figur 4 zeigt einen Kunststoffkörper 1 ähnlich Figur 3, mit dem Unterschied, daß der Kunststoffkörper 1 ein geschlossenzellig geschäumtes, vernetztes Polypropylen mit einem Raumgewicht von 150 kg/m³ ist. Die Dicke beträgt 10 mm, und die Mündungen der Kanäle 2 sind ausschließlich nebeneinanderliegend auf der Oberseite angeordnet. Die Unterseite des Kunststoffkörpers 1 ist auf ein Trägerblech 6 aufkaschiert, das eine leichte Anbringung bei der Verwendung als Schallschluckmatte ermöglicht.

Der Kunststoffkörper 1 gemäß Figur 5 besteht aus einer Bahn aus einem geschlossenzellig geschäumten, vernetzten Polyethylen mit einem Raumgewicht von 90 kg/m³. Die Dicke beträgt 8 mm, und die Oberseite zeigt die Mündungen von im Inneren des Kunststoffkörpers 1 ineinander übergehenden Kanälen 2.

Das Material ist verrottungsfest, hat eine textilartig weiche Oberfläche und eine gute Wasseraufnahmefähigkeit. Es eignet sich aus diesem Grunde ausgezeichnet für die Herstellung hochwertiger Einlegesohlen.

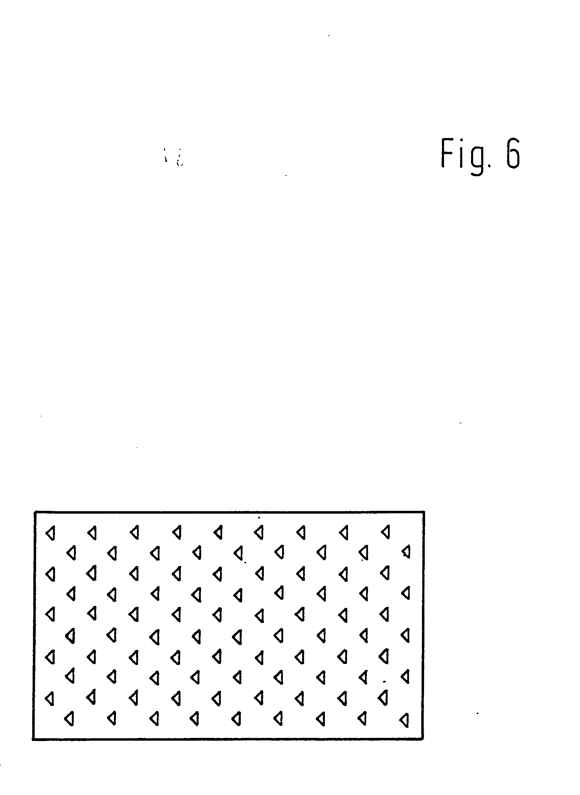

Figur 6 zeigt die Oberseite eines Kunststoffkörpers 1, welcher durch eine Vielzahl von musterartig zugeordneten Kanalmündungen unterbrochen ist. Das Profil ist dreieckig ausgebildet, jedoch nur im Bereich der eigentlichen Mündung der Kanäle 2 klar erkennbar, weil hier die Schaumstoffbahn einheitlich, folienartig abgeschlossen ist. Im Inneren weist das Profil demgegenüber eine ähnliche Zerklüftung auf wie in Figur 1 gezeigt.

**Patentansprüche**

1. Schaumstoffbahn, bestehend aus einem geschlossenzellig geschäumten, vernetzten Kunststoffkörper 1, der eine sich im wesentlichen parallel zu der Oberseite erstreckende Unterseite aufweist, bei dem die Ober- und/oder die Unterseite durch in den Kunststoffkörper (1) eindringende, musterartig über die Fläche verteilte Kanäle (2) mit darin eingenadelten Fasern unterbrochen ist, dadurch gekennzeichnet, daß die in den Kunststoffkörper (1) eingensdelten Fasern wenigstens einfach gekräuselt sind.

2. Schaumstoffbahn anch Anspruch 1, dadurch gekennzeichnet, daß die Fasern gebündelt sind.

3. Schaumstoffbahn nach Anspruch 1 oder 2, dadurch gekennzeichnet, daß die Fasern Endungen aufweisen, die den Kunststoffkörper (1) überragen.

4. Schaumatoffbahn nach Anspruch 3, dadurch gekennzeichnet, daß die Endungen untereinander und/oder mit dem Kunststoffkörper (1) verbunden sind.

5. Schaumstoffbahn nach Anspruch 3 bis 4, dadurch gekennzeichnet, daß die Endungen in ein Vlies, einen Vliesstoff, ein Gewebe, ein Gewirke und/oder eine Folie eingebunden sind.

6. Schaumstoffbahn nach Anspruch 1 bis 5, dadurch gekennzeichnet, daß die Fasern und die Wandung der Kanäle (2) ganz oder teilweise verklebt sind.

7. Schaumstoffbahn nach Anspruch 1 bis 6, dadurch gekennzeichnet, daß die Ober- und/oder die Unterseite des Kunststoffkörpers (1) mit einer luftundurchlässigen Folie verbunden ist.

8. Schaumstoffbahn nach Anspruch 1 bis 7, dadurch gekennzeichnet, daß der Kunststoffkörper (1) aus einem geschlossenzellig geschäumten, vernetzten Polyolefin besteht.

9. Schaumstoffbahn nach Anspruch 8, dadurch gekennzeichnet, daß das Polyolefin ein Polyethylen ist.

### Claims

1. A foam web which comprises a closed-cell expanded reticulated plastics body (1) whose underside is essentially parallel to the upper side and in which the upper side and/or the underside is interrupted by channels (2) which penetrate into the plastics body (1), which are distributed over the surface in a pattern and which have fibres needled thereinto, characterised in that the fibres needled into the plastics body (1) are crimped at least once.

2. A foam web according to claim 1, characterised in that the fibres are bundled.

3. A foam web according to claim 1 or 2, characterised in that the fibres have ends which project beyond the plastics body (1).

4. A foam web according to claim 3, characterised in that the ends are joined to one another and/or to the plastics body (1).

5. A foam web according to claim 3 or 4, characterised in that the ends are bonded into a bonded or unbonded fibre web, a woven fabric, a knitted fabric and/or a plastic sheet.

6. A foam web according to any of claims 1 to 5, characterised in that the fibres and the walls of the channels (2) are wholly or partly adhesively bonded.

7. A foam web according to any of claims 1 to 6, characterised in that the upper side and/or the underside of the plastics body (1) is bonded to an air-impermeable plastic sheet.

8. A foam web according to any of claims 1 to 7 characterised in that the plastics body (1) is formed of a closed-cell expanded reticulated polyolefin.

9. A foam web according to claim 8, characterised in that the polyolefin is a polyethylene.

### Revendications

1. Feuille de mousse constituée d'un corps en matière plastique (1) réticulée réalisé en mousse à cellules fermées, qui présente une face inférieure disposée essentiellement parallèlement à la face supérieure, dans laquelle la face supérieure et/ou la face inférieure sont interrompues par des canaux (2) répartis suivant un dessin sur toute la surface et pénétrant dans le corps en matière plastique (1), et dans lesquels sont inséres des fibres, caractérisée en ce que les fibres insérées dans le corps en matière plastique (1) présentent au moins une ondulation.

2. Feuille de mousse selon la revendication 1, caractérisée en ce que les fibres sont liées entre elles.

3. Feuille de mousse selon la revendication 1 ou 2, caractérisée en ce que les fibres présentent des extrémités qui font saillie à l'extérieur du corps en matière plastique (1).

4. Feuille de mousse selon la revendication 3, caractérisée en ce que ses extrémités sont reliées les unes aux autres et/ou au corps en matière plastique (1).

5. Feuille de mousse selon les revendications 3 et 4, caractérisée en ce que les extrémités sont liées à une nappe de fibres, une substance fibreuse, un tissu, un produit tricoté et/ou une feuille.

6. Feuille de mousse selon les revendications 1 à 5, caractérisée en ce que les fibres et la paroi des canaux (2) sont collées totalement ou partiellement ensemble.

7. Feuille de mousse selon les revendications 1 à 6, caractérisée en ce que la face supérieure et/ou la face inférieure du corps en matière plastique (1) sont reliées à une feuille imperméable à l'air.

8. Feuille de mousse selon les revendications 1 à 7, caractérisée en ce que le corps en matière plastique (1) est constitué de polyoléfine réticulée, sous forme de mousse à cellules fermées.

9. Feuille de mousse selon la revendication 8, caractérisée en ce que la polyoléfine est du polyéthylène.

Fig. 1

2
1

Fig. 2

Fig. 3

7

Fig. 4

6

Fig. 5

Fig. 6